# EUROPÄISCHE PATENTANMELDUNG

(11) **EP 1 026 065 A2**
(43) Veröffentlichungstag der Anmeldung: **09.08.2000**
(21) Anmeldenummer: 00101686.4
(22) Anmeldetag: 03.02.2000
(51) Int. Cl.: B62D 1/04

(54) **Herstellungsverfahren eines Lenkrades**

(30) Priorität: 05.02.1999 DE 19904746
(71) Anmelder: TRW Automotive Safety Systems GmbH & Co. KG, 63743 Aschaffenburg (DE)
(72) Erfinder: Kreuzer, Martin, 63839 Kleinwallstadt (DE)
(74) Vertreter: Degwert, Hartmut, Dipl.-Phys.

(57) **Zusammenfassung**

Zur Herstellung eines Lenkrades mit einem Lenkradskelett und einer nahtlosen, den Lenkradkranz, die Lenkradspeichen und den zentralen Bereich für eine Airbag-Abdeckung mit Aufreißlinien umfassenden Ummantelung aus einem im Gieß- oder Spritzverfahren einstückig hergestellten Kunststoffformteil mit geschlossener Oberfläche und ggf. geschäumtem Basiskörper wird ein Verfahren vorgeschlagen, das die Ausbildung eines Formhohlraums für die Anordnung des Airbagmodul ermöglicht, ohne daß auf eine mehrteilige Ausbildung des Lenkradskeletts oder andere aufwendige Verfahren zurückgegriffen werden muß. Dazu wird am zentralen Basisteil (1) des Lenkradskeletts (2), ein Formkörper (3) aus einem auflösbarem Material befestigt. Darum wird das Lenkradskelett (2) mit dem Formkörper (3) in eine Form zur Ausbildung der Ummantelung (4) eingelegt. Die Ummantelung (4) wird hergestellt und aus der Form entnommen. Schließlich wird der Formkörper (3) durch Zugabe eines Lösungsmittels aufgelöst, wobei der Formhohlraum verbleibt.

## Beschreibung

Die Erfindung betrifft ein Verfahren zur Herstellung eines Lenkrades mit einer nahtlosen, den Lenkradkranz, die Lenkradspeichen und den zentralen Bereich für eine Airbag-Abdeckung mit Aufreißlinien umfassenden Ummantelung aus einem im Gieß- oder Spritzverfahren einstückig hergestellten Kunststoffformteil mit geschlossener Oberfläche.

Die Mehrzahl der Ummantelungen von Lenkrädern mit integriertem Airbag wird heute zweiteilig ausgeführt, mit einem das Lenkradskelett umschließenden Formteil und einer getrennt hergestellten Abdeckung für die Airbag-Einbauöffnung im Nabenbereich des Lenkrades, wobei große Anstrengungen unternommen werden, um beide Teile in ihrem optischen und haptischen Erscheinungsbild aufeinander abzustimmen. Erhebliche weitere Schwierigkeiten ergeben sich aus der Tatsache, daß die Airbag-Abdeckung aufreißbar und um den zur Betätigung der Hupe erforderlichen Tastweg relativ zur Lenkradnabe beweglich ausgebildet sein muß.

Da ein Spalt zwischen dem das Lenkrad umschließenden Formteil und der Airbag-Abdeckung als optisch nachteilig angesehen wird, hat man bereits vorgeschlagen, Formteil und Airbag-Abdeckung einteilig herzustellen. Derartige Verfahren bereiten wegen der zu berücksichtigenden Aufreiß- und Betätigungsfunktionen im Bereich der Airbag-Abdeckungen gewisse, im wesentlichen lösbare fertigungstechnische Schwierigkeiten und erfordern zwingend eine weitgehend neue Auslegung der Lenkradkonstruktion, weil die Montage nur von der Lenkradrückseite her erfolgen kann und weil für das Einbringen des Airbag-Moduls mit zusammengefaltetem Gassack und Gasgenerator besondere Vorkehrungen getroffen werden müssen. Vielfach hat man sich damit geholfen, das Lenkradskelett zu unterteilen in ein Basisteil mit Nabe und ggf. Speichenstümpfen, das mit dem Airbag-Modul und anderen Funktionsteilen ausgestattet werden kann, bevor der Lenkradkranz mit Speichen bzw. Speichenstümpfen und einstückiger Umkleidung aufgesetzt und mit dem Basisteil verbunden wird.

Als besonders nachteilig wird dabei angesehen, daß die Befestigung zwischen Basisteil und Lenkradkranz mit einem zusätzlichen Materialaufwand verbunden ist, der dem allgemeinen Bestreben nach Gewichtsersparnis im Fahrzeugbau zuwiderläuft. Außerdem ist es schwierig, die beiden Bauteile maßlich optimal aufeinander abzustimmen. Insbesondere der zusammengefaltete Gassack ist als Formteil mit erheblichen Toleranzen behaftet, so daß die Zuordnung des Abdeckbereiches nicht einfach ist. Da der Abdeckbereich aufreißbar sein muß, darf er keine besondere Eigensteifigkeit aufweisen und benötigt deshalb den zusammengefalteten Gassack als Widerlager. Ist das Gassackpaket zu 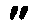 dünn", wird die Abdeckung nicht ausreichend abgestützt, ist es zu 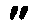 dick", wird sie nach oben ausgebeult. Beides ist unerwünscht.

Ähnliche Probleme ergeben sich hinsichtlich der Betätigungsbewegungen, die von außen über das einstückig am Lenkradkranz ausgebildete Kunststoffformteil auf die im Basisteil montierten Betätigungsorgane übertragen werden müssen. Es dürfte ohne weiteres klar sein, daß die Anpassung einer gießformtechnisch hergestellten Oberfläche an eine montierte Oberfläche fertigungstechnisch sehr aufwendig ist und daß die Übertragungsfunktionen nur dann betriebssicher ausgeführt werden können, wenn bei der Anpassung sehr enge Toleranzen eingehalten werden können.

Daraus ergibt sich die Aufgabe, das eingangs genannte Verfahren so weiterzubilden, daß alle vorgenannten Schwierigkeiten überwunden werden können und daß zur Ummantelung eines Lenkrades ein eintsückiges Kunststoffteil mit geschlossener Oberfläche und insbesondere geschäumtem Kern geschaffen werden kann, bei dem auch die Anpassungsprobleme mit vertretbarem wirtschaftlichen Aufwand gelöst werden können.

Zur Lösung dieser Aufgabe wird erfindungsgemäß vorgeschlagen daß am zentralen Basisteil des Lenkradskeletts ein Formkörper aus einem auflösbaren Material befestigt wird, das danach das Lenkradskelett mit dem Formkörper in eine Form zur Ausbildung der Ummantelung eingelegt wird, daß die Ummantelung hergestellt und aus der Form entnommen wird und daß schließlich der Formkörper durch Zugabe eines Lösungsmittels aufgelöst wird.

Durch die Verwendung eines Formkörpers aus auflösbarem Material kann die Ummantelung mit einer paßgenauen Hohlform hergestellt werden, in die nachträglich das Airbag-Modul eingebracht werden kann. Das Airbag-Modul selbst kommt wegen der 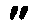 weichen" Oberfläche des Gassackpakets als Formteil nicht in Betracht, da damit die im Abdeckbereich des Kunststoffformteils erforderliche Sollbruchlinie nicht reproduzierbar ausgeformt werden kann. Mit dem Formkörper aus auflösbarem Material hingegen, kann in Verbindung mit der Außenform in der Ummantelung eine sehr genau dimensionierte Linie geringer Wanddicke erzeugt werden, die eine eng tolerierte Festigkeit aufweist und beim Aufblasen des Gassacks zuverlässig und unverzüglich aufreißt. Die Herstellung des Abdeckbereichs ist damit genauso einfach wie bei einer als gesondertes Bauteil hergestellten Abdeckkappe, d.h. es können im Normalbetrieb ausreichend belastbare und im Notfall leicht aufreißbare Sollrißlinien ebenso realisiert werden, wie Verstärkungseinlagen und als Scharnier wirkende Bauteile. Außerdem ist durch die einstückige Herstellung selbstverständlich gewährleistet, daß Lenkrad- und Abdeckbereich optisch und haptisch das gleiche Erscheinungsbild aufweisen.

Der Formkörper besteht vorzugsweise aus einem expandierbarem Polystyrol. Der Formkörper kann eine Abdeckung aus einer elastomeren Kunststoffolie oder einem elastomeren Kunststoffnetz aufweisen.

Als Lösungsmittel für den Formkörper kommen Toluol, Xylol oder Methylenchlorid in Betracht.

Weitere vorteilhafte Ausgestaltungen des erfindungsgemäßen Verfahrens sind in den Unteransprüchen 5 bis 11 angegeben. Damit läßt sich das Verfahren an die verschiedensten Anwendungszwecke und Anforderungen anpassen. Mit der Erfindung wird demnach ein Verfahren vorgeschlagen, mit dem nicht nur die eingangs genannten Schwierigkeiten überwunden werden können, das vielmehr auch noch äußerst flexibel und betriebssicher ist.

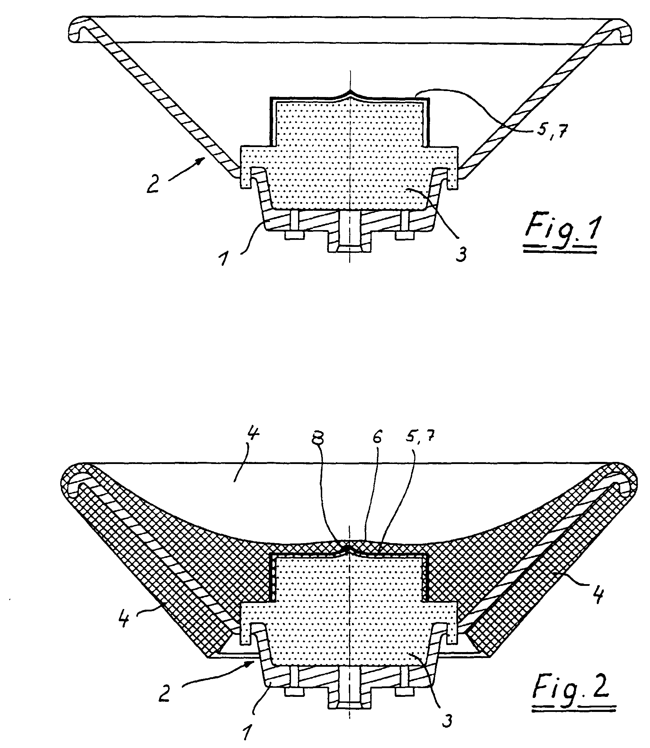

Das erfindungsgemäße Verfahren wird anhand des in den Figuren 1 und 2 vereinfacht dargestellten Ausführungsbeispiels näher erläutert. Es zeigen:
- Figur 1: einen Schnitt durch ein Lenkradskelett mit Formkörper,
- Figur 2: einen Schnitt durch ein Lenkrad gemäß Figur 1 mit Formkörper und Ummantelung und
- Figur 3: eine schematische Darstellung der Montage eines Airbagmoduls.

In Figur 1 ist ein Schnitt durch ein vereinfachtes Lenkradskelett 2 dargestellt, das ein Basisteil 1 umfaßt, an dem ein Formkörper 3 aus einem auflösbaren Material befestigt ist. Der Formkörper 3 entspricht dem Hohlraum, der für die Anordnung eines Airbagmoduls bei der Herstellung der Ummantelung 4 freigehalten werden muß. Der Formkörper 3 kann ganz oder teilweise eine Abdeckkung 5 aufweisen, die gleichzeitig als Verstärkungseinlage 7 für die Ummantelung dienen kann. Abdeckkung 5 und Verstärkungseinlage 7 können jedoch auch aus unterschiedlichen Teilen bestehen und alternativ oder gemeinsam verwendet werden.

Zur Herstellung der Ummantelung 4, die aus Figur 2 ersichtlich ist, wird das Lenkradskelett 2 mit dem Formkörper 3 gemäß Figur 1 in an sich bekannter Weise in eine entsprechende Form eingelegt. Anschließend wird das für die Ummantelung 4 benötigte Material in die Form eingebracht, wo es den Formhohlraum ausfüllt und das Lenkradskelett 2 sowie den Formkörper 3 im wesentlichen allseitig umschließt. Dabei können die üblichen, für die Herstellung einer Lenkradummantelung bewährten Kunststoffe verwendet werden. Wenn das für die Herstellung der Ummantelung in die Form eingespritzte Material ausreagiert bzw. ausgehärtet ist und die Ummantelung ihre endgültige, unveränderbare Form erhalten hat, kann das Lenkradskelett 2 mit Formkörper 3 und Ummantelung 4 aus der Form entnommen werden. Anschließend wird das Produkt gemäß Figur 2 mit einem geeigneten Lösungsmittel beaufschlagt, wobei der Formkörper 3 vollkommen aufgelöst wird, d. h. sich in den flüssigen oder gasförmigen Aggregatzustand umwandelt und aus dem Formhohlraum für das Airbagmodul abgeführt werden kann. Zurück bleibt ein Lenkradskelett 2 mit einer Ummantelung 4 sowie ggf. mit einer Abdeckkung 5 aus einer elastomeren Kunststoffolie oder einem elastomeren Kunststoffnetz bzw. mit einer Verstärkungseinlage aus einem Kunststoffgewebe, einem Kunststoffnetz, einer perforierten Metall- oder Kunststoffolie oder dergleichen. Die Ummantelung 4 weist im Bereich der Airbag-Abdeckkung 6 eine Schwächungslinie 8 auf, längs derer die Airbag-Abdeckkung 6 bei einer Aktivierung des Airbagmodul aufreißt. Längs der Schwächungslinie 8 weist das Material der Ummantelung 4 eine geringere Dicke auf, und die Verstärkungseinlage 7 ist hier weggelassen bzw. unterbrochen und dadurch soweit geschwächt, daß das Aufreißen der Ummantelung 4 längs der Schwächungslinie 8 nicht behindert wird.

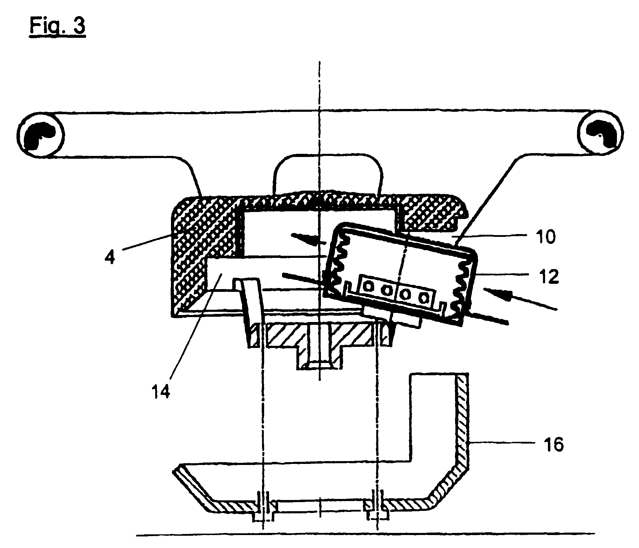

Bei der bevorzugten Ausführungsform wird die Ummantelung 4, wie in Fig. 3 gezeigt, mit einer seitlich am Nabenbereich ausgesparten Öffnung 10 versehen. Durch diese Öffnung kann ein Airbagmodul 12 in den nach Auflösung des Formkörpers 3 freigewordenen Formhohlraum 14 eingeschoben werden. Anschließend wird die Öffnung 12 durch eine von hinten aufgesetzte Klappe 16 verschlossen.

## Patentansprüche

1. Verfahren zur Herstellung eines Lenkrades mit einem Lenkradskelett und einer nahtlosen, den Lenkradkranz, die Lenkradspeichen und den zentralen Bereich für eine Airbag-Abdeckung mit Aufreißlinien umfassenden Ummantelung aus einem im Gieß- oder Spritzverfahren einstückig hergestellten Kunststoffformteil mit geschlossener Oberfläche, dadurch gekennzeichnet, daß am zentralen Basisteil (1) des Lenkradskeletts (2) ein Formkörper (3) aus einem auflösbaren Material befestigt wird, daß danach das Lenkradskelett (2) mit dem Formkörper (3) in eine Form zur Ausbildung der Ummantelung (4) eingelegt wird, daß die Ummantelung (4) hergestellt und aus der Form entnommen wird und daß schließlich der Formkörper (3) durch Zugabe eines Lösungsmittels aufgelöst wird.

2. Verfahren nach Anspruch 1, dadurch gekennzeichnet, daß der Formkörper (3) aus expandierbarem Polystyrol besteht.

3. Verfahren nach Anspruch 1 oder 2, dadurch gekennzeichnet, daß der Formkörper (3) eine Abdeckung (5) aus einer elastomeren Kunststoffolie oder einem elastomeren Kunststoffnetz aufweist.

4. Verfahren nach einem der Ansprüche 1 bis 3, dadurch gekennzeichnet, daß als Lösungsmittel Toluol, Xylol oder Methylenchlorid verwendet wird.

5. Verfahren nach einem der Ansprüche 1 bis 4, dadurch gekennzeichnet, daß die Ummantelung (4) zusammen mit dem Formkörper (3) in ein Lösungsmittelbad eingebracht wird.

6. Verfahren nach einem der Ansprüche 1 bis 4, dadurch gekennzeichnet, daß die Auflösung des Formkörpers (3) mittels Lösungsmitteldämpfen vorgenommen wird.

7. Verfahren nach einem der Ansprüche 1 bis 6, dadurch gekennzeichnet, daß die Ummantelung (4) aus einem geeigneten Kunststoff nach dem sogenannten Integralschaumverfahren hergestellt wird.

8. Verfahren nach Anspruch 7, dadurch gekennzeichnet, daß für die Ummantelung schäumbares Polyuretan verwendet wird.

9. Verfahren nach einem der Ansprüche 1 bis 6, dadurch gekennzeichnet, daß die Ummantelung (4) aus zwei verschiedenen Kunststoffen nach dem sogenannten 2K-Verfahren hergestellt wird.

10. Verfahren nach Anspruch 9, dadurch gekennzeichnet, daß für die Ummantelung thermoplastische Kunststoffe verwendet werden.

11. Verfahren nach einem der Ansprüche 1 bis 10, dadurch gekennzeichnet, daß die Ummantelung (4) im Bereich der Airbag-Abdeckung (6) mit einer Verstärkungseinlage (7) aus einem Kunststoffgewebe, einem Kunststoffnetz, einer perforierten Metall- oder Kunststoffolie oder dergl. versehen wird, die längs der Schwächungslinie (8) weggelassen bzw. unterbrochen ist.

12. Verfahren nach einem der vorstehenden Ansprüche, dadurch gekennzeichnet, daß die Ummantelung (4) mit einer seitlichen Öffnung (10) zum Einschieben eines Airbagmoduls (12) in den Formhohlraum (14) ausgebildet wird.
